Europäisches Patentamt

European Patent Office

Office européen des brevets

(11) Publication number: **0 300 591**
**A2**

# EUROPEAN PATENT APPLICATION

(21) Application number: 88302825.0

(51) Int. Cl.4: **G06F 7/52**

(22) Date of filing: 30.03.88

(30) Priority: 20.07.87 US 74488

(43) Date of publication of application:
**25.01.89 Bulletin 89/04**

(84) Designated Contracting States:
**DE FR GB**

(71) Applicant: **CONTROL DATA CORPORATION**
**8100-34th Avenue South**
**Minneapolis Minnesota 55440(US)**

(72) Inventor: **Tran, Richard Howard**
**Apartment E816 1515 South Fourth Street**
**Minneapolis Minnesota 55454(US)**

(74) Representative: **Caro, William Egerton et al**
**J. MILLER & CO. Lincoln House 296-302 High**
**Holborn**
**London WC1V 7JH(GB)**

(54) Method of and apparatus for determining a 2n bit partial product of approximate quotient.

(57) Apparatus for determining a 2n bit partial product of a first 2n bit number and a second n bit number, the n bit number having a value equal to one of $(2^{n-1} - 2)$, $(2^{n-1} - 1)$, $(2^{n-1})$ and $(2^{n-1} + 1)$, comprises a shift register (42) for dividing the first number by 2 to achieve a value of one-half of the first number, a register (30) for determining a third number (G) comprising the n most significant bits of the first number, a multiplier (34) for multiplying the third number by 2 to achieve a value of twice the third number, and a select circuit (36) responsive to the value of the second number for (a) subtracting twice the third number from one-half the first number if the value of the second number is $(2^{n-1} - 2)$, (b) subtracting the third number from one-half the first number if the value of the second number is $(2^{n-1} - 1)$, (c) selecting one-half the first number if the value of the second number is $(2^{n-1})$, and (d) adding the third number to one-half the first number if the value of the second number is $(2^{n-1} + 1)$.

Fig. 2A

# METHOD OF AND APPARATUS FOR DETERMINING A 2n BIT PARTIAL PRODUCT OR APPROXIMATE QUOTIENT

This invention relates to methods of an apparatus for determining 2n bit partial products or approximate quotients, and in particular, although not so restricted, to double precision approximate quotient networks for use in double precision divide networks for digital computer applications employing large words.

The CYBER 180 Model 860 computer, available from Control Data Corporation, employs a subroutine for achieving division of a pair of 128 bit words. The apparatus requires, however, an intermediate step of determining a quadruple precision approximate quotient of two numbers, the approximate quotient thereafter being processed with a divisor and dividend to achieve a correction factor to derive a true quotient which is then processed by a double precision floating point divide or decimal divide, depending upon the setting of a flag. However, the network employed in the aforementioned computer requires lengthy multiplication procedures to obtain the quadruple precision approximate quotient.

The present invention seeks to provide apparatus for achieving a double precision approximate quotient for use in large word divide networks which is faster than prior techniques.

According to one aspect of the present invention there is provided apparatus for determining a 2n bit partial product of a first 2n bit number and a second n bit number, said n bit number having a value equal to one of $(2^{n-1} - 2)$, $(2^{n-1} - 1)$, $(2^{n-1})$ and $(2^{n-1} + 1)$, said apparatus being characterised by comprising: means for dividing said first number by 2 to achieve a value of one-half of said first number; means for determining a third number comprising the n most significant bits of said first number; means for multiplying said third number by 2 to achieve a value of twice said third number; and responsive means responsive to said aforesaid means and to the value of said second number for (a) subtracting twice said third number from one-half said first number if the value of said second number is $(2^{n-1} - 2)$, (b) subtracting said third number from one-half said first number if the value of said second number is $(2^{n-1} - 1)$, (c) selecting one-half said first number if said value of said second number is $(2^{n-1})$, and (d) adding said third number to one-half said first number if the value of said second number is $(2^{n-1} + 1)$.

Said multiplying means and said responsive means may comprise means for determining the 2's complement of said third number, means for determining twice the 2's complement of said third number, selecting means responsive to the value of said second number (a) for selecting twice the 2's complement of said third number when the value of said second number is $(2^{n-1} - 2)$, (b) for selecting said 2's complement of said third number when the value of said second number is $(2^{n-1} - 1)$, (c) for selecting zero when the value of said second number is $(2^{n-1})$, and (d) for selecting said third number when the value of said second number is $(2^{n-1} + 1)$, and add means for adding one-half said first number to the number selected by said select means.

According to another aspect of the present invention there is provided apparatus for determining a 2n bit approximate quotient of a 2n bit dividend and a 2n bit divisor comprising: means for deriving a first number equal to 2 times $2^{n-1}$ $(2^{n-1} - 1)$ divided by the n most significant bits of said divisor; first multiplier means for multiplying said divisor by said first number to derive the result; first complement means for determining the 2's complement of the result from said first multiplier means; and second multiplier means for multiplying said dividend by said first number to derive a result, characterised by: second complement means for determining the 2's complement of the n most significant bits of the result from said second multiplier means; determining means for determining 2 times the 2's complement of the n most significant bits of the result from said second multiplier means; select means responsive to the n most significant bits of the 2's complement from said first complement means for selecting a value equal to one of (a) the 2's complement from said second complement means, (b) the 2's complement from said determine means, (c) zero, or (d) the n most significant bits of the result from said second multiplier means; shift means for right shifting the result from said second multiplier means one place; third multiplier means for multiplying the n most significant bits of the result from said second multiplier means by the n least significant bits of the 2's complement from said first complement means to derive a result; and adder means for adding the result from said third multiplier means and the result of right shifting by said shift means and the value selected by said select means to determine a 2n bit approximate quotient.

The apparatus may include means for right shifting said approximate quotient and said divisor by predetermined amounts and for left shifting said dividend a predetermined amount, fourth multiplier means for multiplying the n most significant bits of said shifted approximate quotient by the n least significant bits of said shifted divisor to achieve a result; fifth multiplier means for multiplying the n least significant bits of said shifted approximate quotient by said shifted divisor to achieve a result; and arithmetic means for determining the difference between the shifted dividend and the sum of the n least significant bits of the result of said fourth and fifth multiplier means to determine a correction value.

Preferably the apparatus includes means for adjusting the value of said approximate quotient by said correction value to achieve a true quotient.

Said other means may further add binary 0101 to said approximate quotient.

According to yet another aspect of the present invention there is provided a method of determining a 2n bit partial product of a first 2n bit number and a second 2n bit number, said n bit number having a value equal to one of $(2^{n-1} - 2)$, $(2^{n-1} - 1)$, $(2^{n-1})$ and $(2^{n-1} + 1)$, said method characterised by comprising: dividing said first number by 2 to achieve a value of one-half of said first number; determining a third number comprising the n most significant bits of said first number; multiplying said third number by 2 to achieve a value of twice said third number; determining the value of said second number; and performing one of the following operations: (a) subtracting twice said third number from one-half said first number if the value of said second number is $(2^{n-1} - 2)$, (b) subtracting said third number from one-half said first number if the value of said second number is $(2^{n-1} - 1)$, (c) selecting one-half said first number if said value of said second number is $(2^{n-1})$, or (d) adding said third number to one-half said first number if the value of said second number is $(2^{n-1} + 1)$.

Preferably the third number is multiplied by 2 and the operations are performed by determining the 2's complement of said third number, multiplying 2's complement of said third number by 2, selecting twice the 2's complement of said third number when the value of said second number is $(2^{n-1} - 2)$, selecting said 2's complement of said third number when the value of said second number is $(2^{n-1} - 1)$, and selecting said third number when the value of said second number is $(2^{n-1} + 1)$, and adding one-half said first number to the selected number.

The invention is illustrated, merely by way of example, in the accompanying drawings, in which:-

Figures 1A and 1B, taken together, illustrate known apparatus for achieving a quadruple precision approximate quotient (Figure 1A) and a double precision final quotient (Figure 1B);

Figures 2A and 2B, taken together, illustrate apparatus according to the present invention for achieving a double precision approximate quotient (Figure 2A) and a double precision final quotient (Figure 2B); and

Figure 3 illustrates the conditions for a select circuit employed in deriving the double precision approximate quotient of Figure 2A.

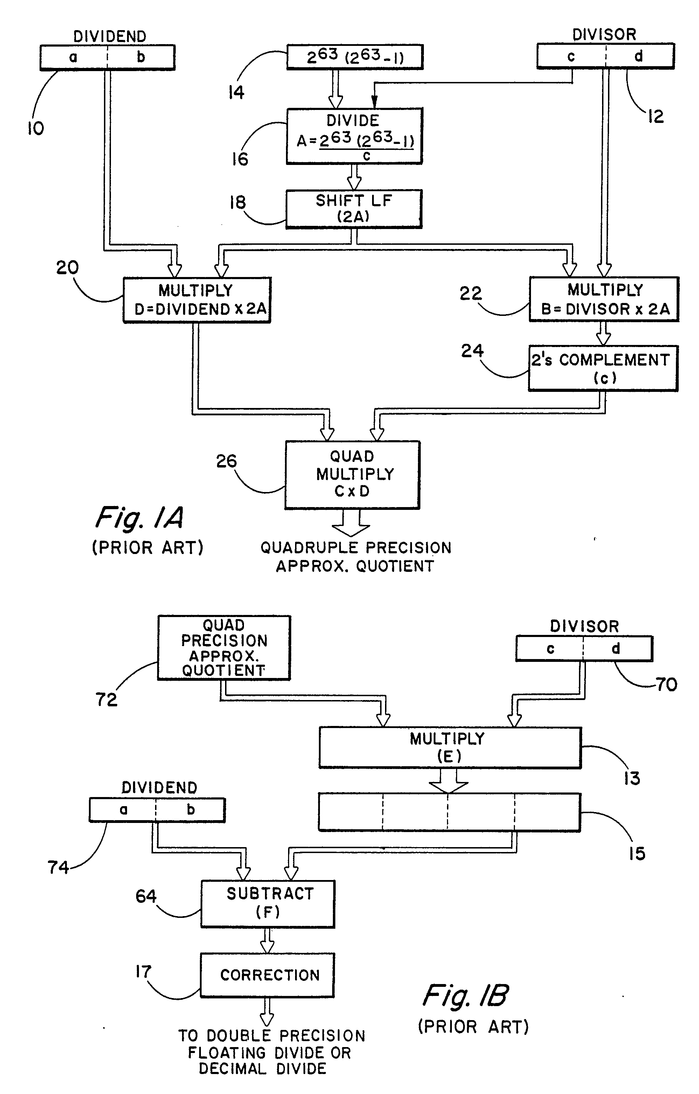

Referring to the drawings, and particularly to Figure 1A, there is illustrated known apparatus for achieving a quadruple precision approximate quotient as employed in the aforementioned CYBER 180 Model 860 computer. A dividend comprises a 2n bit number (in the Example 128 bits) whose upper n bits (64 bits) is designated by "a" and whose lower n bits (64 bits) is designated by "b". Therefore, the dividend in a register 10 may be represented by the number $2^{64}a + b$. Likewise, a divisor in a register 12 is represented by a 2n bit number (128 bits) whose upper n bits (64 bits) comprises the number designated by "c" and whose lower n bits (64 bits) is designated by "d". Therefore, the divisor is represented by $2^{64}c + d$. A register 14 holds the number $2^{63}(2^{63} - 1)$. A divider 16 divides the contents of the register 14 by c to achieve a binary number A, and a shift register 18 left shifts the result one place to achieve a number 2A. Multipliers 20, 22 double precision multiply the dividend and the divisor by 2A to achieve numbers D and B, respectively. A 2's complementer 24 2's complements the number B to achieve the number C. A quadruple precision multiplier 26 multiplies C by D and the approximate quotient comprises the upper 128 bits of the result.

Referring to Figure 1B, a correction factor is necessary to achieve 96 bit precision for 128 bit dividends and divisors. The 128-bit divisor is right shifted 31 places in a register 70 and the approximate quotient from the multiplier 26 is right shifted 30 places in a register 72. The shifted results are multiplied by a multiplier 13 to obtain a quadruple precision resultant E in a register 15. The dividend is left shifted 65 places in a register 74. The 128 least significant bits of a quadruple precision result E in the register 15 are subtracted from the 128 bits in the register 74 by a subtract circuit 64 to derive a correction F from a correction circuit 17. If the resultant correction F is positive, it is added to the approximate quotient from the multiplier 26 to form the true quotient, whereas if the resultant correction F is negative it is subtracted from the approximate quotient to form the true quotient. The result thereupon is forwarded to a double precision floating dividend or decimal divide, as the case may be, in accordance with the setting of an instruction flag.

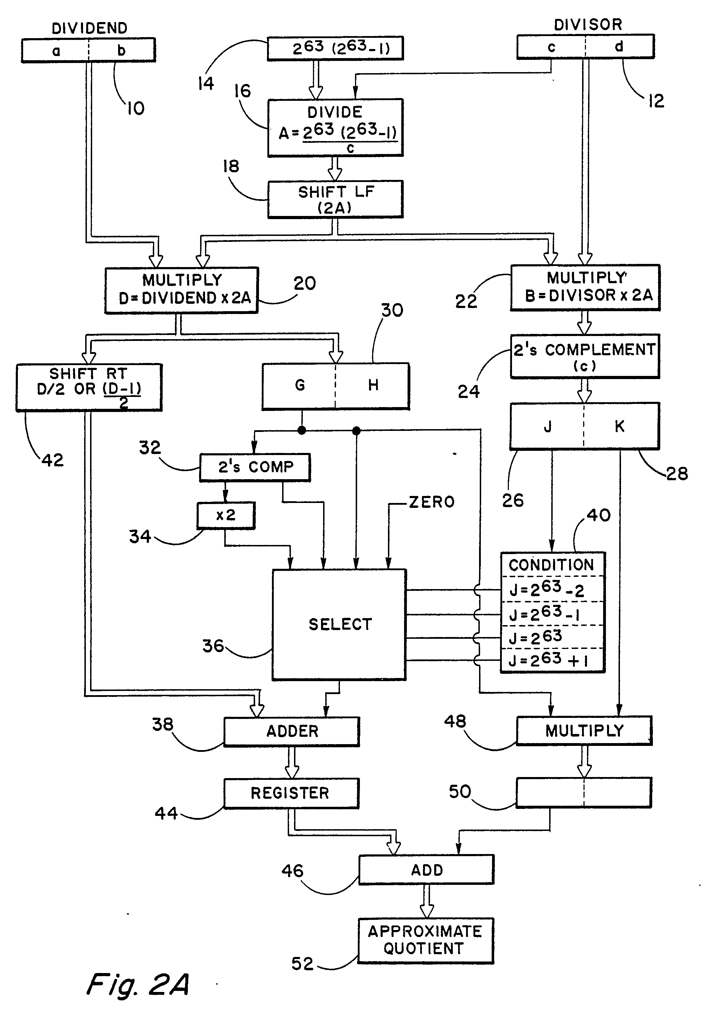

Referring to Figure 2A, there is illustrated apparatus according to the present invention for achieving a double precision approximate quotient. As in the case of Figure 1A, a divisor in a register 10 comprises a and b as its most and least significant 64 bit numbers, and a divisor in a register 12 comprises c and d as the most and least significant 64 bits. A number $2^{63}(2^{63} - 1)$ in a register 14 is divided by c by a divider 16 and left shifted by a shift register 18 to derive a number 2A. Multipliers 20,22 multiply the dividend and the divisor by the value 2A, the result from the multiplier 22 being 2's complemented by a 2's complementer 24 to achieve a 128 bit number C and the output of the multiplier 20 being a 128 bit number D. To the extent thus far described, the apparatus illustrated in Figure 2A is identical to that illustrated in Figure 1A.

The output of the multiplier 20 is multiplied by the output of the 2's complementer 24. To accomplish this, it has been discovered that a value J, which is the 64 most significant bits of the number C, will have one of only four possible values: $(2^{63} - 2)$, $(2^{63} - 1)$, $(2^{63})$ and $(2^{63} + 1)$. It has further been found that a value G which is the 64 most significant bits of D, may be arithmetically processed with D/2 to achieve a partial product. In particular, one of the following operations is accomplished, depending on the value of J:

| **Condition** | **Operation** |
|---|---|
| $J = 2^{63} - 2$ | $D/2 - 2G$ |
| $J = 2^{63} - 1$ | $D/2 - G$ |
| $J = 2^{63}$ | $D/2$ |
| $J = 2^{63} + 1$ | $D/2 + G$ |

The foregoing selection and operation is accomplished by processing the value G through a register 30 to each of a 2's complementer 32 and a select circuit 36. The 2's complementer 32 provides outputs to the select circuit 36 and a multiplier 34. The multiplier 34 actually is a left shift register to achieve a multiplication by 2 (2G), and provides the result to the select circuit 36. The value G, the 2's complement from the complementer 32 and the 2's complement times 2 from the multiplier 34 are, together with the value of all zeros, provided as four inputs to the select circuit 36, the output of which is provided as one input to an adder 38. The select circuit 36 operates on the condition of the value J from a table 40 to select one of the inputs for input to the adder 38. Particularly, if $J = 2^{63} - 2$, the 2's complement times 2 of the value G from the multiplier 34 is provided as the input to the adder 38. If $J = 2^{63} - 1$, the 2's complement from the complementer 32 is supplied by the select circuit 36 to the adder 38. If $J = 2^{63}$, the select circuit 36 provides the all zero input to the adder 38, whereas if $J = 2^{63} + 1$, the select circuit 36 selects the value G from the register 30 to be inputted to the adder 38.

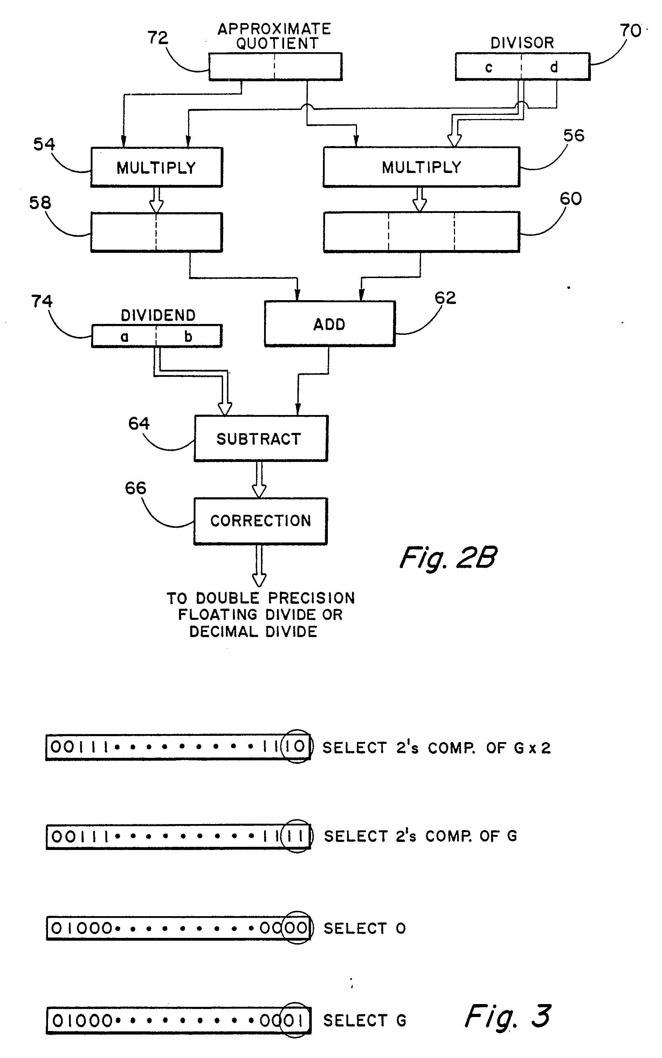

Figure 3 illustrates the operation of the table 40. In each case shown in Figure 3, the value J is illustrated. It can be seen by inspection of the contents of a register 26 that the two least significant bits of the value J may be examined to determine the condition of the value J for the select circuit 36. Thus, if the two least significant bits are "10", the 2's complement times 2 of the value G is selected, whereas if the two least significant bits of the value J are "11", the 2's complement of the value G is selected. If the two least significant bits of the value J are "00", the select circuit 36 selects all zeros for input to the adder 38, whereas if the two least significant bits of the value J are "01", the value G is selected for the adder 38.

A shift register 42 right shifts the number D from the multiplier 20 by one place to provide an output equal to D/2 or (D-1)/2, the output of which is provided as the second input to the adder 38. The result is provided to a register 44, which provides an output to an adder 46. It should be noted that the adders 38,46 could be combined as a single adder. It should also be noted that the arithmetic subtraction of the value G or the value 2G from D/2 as indicated in the foregoing table is accomplished by adding the 2's complement or twice the 2's complement of the value G to D/2.

A value K comprising the 64 least significant bits of the number C held in a register 28 is supplied to a multiplier 48, whose second input is the value G in the register 30. The multiplier 48 provides a double precision multiply of the values K and G which is held in a register 50. The 64 most significant bits in the register 50 are provided as the second input to the adder 46. The adder 46 adds the contents of the register 44 to the 64 most significant bits of the contents of the register 50 to obtain a double precision approximate quotient in a register 52.

Referring to Figure 2B, a correction factor may be obtained to achieve 96 bit accuracy for the quotient (from 128 bit divisors and dividends). In particular, the approximate quotient from the register 52 is right shifted 30 places by a shift register 72 and the divisor is right shifted 31 places by a shift register 70. A multiplier 54 multiplies the 64 most significant bits of the shifted approximate quotient in the register 72 with the 64 least significant bits in the shifted divisor in the register 70. A multiplier 56 triple precision multiplies the shifted divisor in the register 70 and the 64 least significant bits of the shifted approximate quotient from the register 72. A register 58 holds the results from the multiplier 54 and a register 60 holds the results from the multiplier 56. The 64 least significant bits in the register 58 are added by an adder 62 to the 64 middle bits of the register 60 (the 64 most significant bits of the 128 least significant bits). The dividend is left shifted 65 places by a shift register 74. A subtract circuit 64 subtracts the 64 bit result from the adder 62 from the 128 bit shifted dividend from the register 74 and provides a correction factor which is either added or subtracted to the double precision approximate quotient from the register 52 to achieve the true quotient, as described in connection with Figure 1B. The result is forwarded to a double precision floating divide or the decimal divide as the case may be, in accordance with the setting of an instruction flag, as described in connection with Figure 1B.

One feature of the present invention resides in the fact that the approximate quotient derived by the apparatus illustrated in Figure 2A achieves a reasonably accurate double precision approximate quotient. Therefore, in applications where less precision is required, the approximate quotient may be utilised alone, or with a slight modification hereinafter described. Particularly, it has been found that for use in a double precision floating point divide network, it is necessary only to employ 95 bits of accuracy, rather than 96 achieved with the correction apparatus in Figure 2B. By adding decimal 5 (binary 0101) to the approximate quotient derived in Figure 2A, a reasonably accurate 95 bit quotient may be forwarded to the floating point divide for processing. Hence, the adder 46 in Figure 2A can additionally be wired to add binary 0101 to the other arithmetic calculations to achieve an approximate quotient 52 having 95 bits of precision for use in floating point divide operations.

Tests have been conducted on the double precision floating point divide operation for the aforementioned CYBER 180 computer, and on a double precision floating point divide operation employing the quotient network in accordance with the present invention. Results reveal that a double precision floating point divide operation employed between 15.57 microseconds and 16.15 microseconds in the CYBER 180 computer. In contrast, employing a double precision quotient network in 96 bit accuracy in accordance with both Figures 2A and 2B, the double precision floating point divide operation required between 12.25 and 13.27 microseconds. In the case of a 95 bit accuracy quotient for use in double precision floating point divide employing the approximate quotient of Figure 2A with the correction factor of 0101, the time required for double precision floating point divide was further reduced to between 9.94 microseconds and 10.57 microseconds. Thus, employing the approximate quotient network of Figure 2A with the correction factor of Figure 2B, a reduction in time of approximately 20 percent is achieved in a double precision floating point divide. By employing the correction factor of 0101 to the approximate quotient of Figure 2A, the time required for double precision floating point divide is reduced by approximately 40 percent.

The present invention thus provides apparatus for rapid and effective quotient networks. Although the present invention has been described in connection with multiple arithmetic networks, multipliers and complement networks, in a typical application only one of each type of network may be required. For example, if several multiplication functions are required, as indicated at blocks 20, 22, 48, 54 and 56 of Figures 2A and 2B, only one multiplier might actually be employed, with the result of each process held in a register for subsequent processing. Further, although the present invention is described in connection with 128 bit divisors and dividends, the invention will work with any 2n bit divisors and dividends. Thus, although the present invention is described where n equals 64 bits, the invention is equally applicable to other bit length numbers.

## Claims

1. Apparatus for determining a 2n bit partial product of a first 2n bit number and a second n bit number, said n bit number having a value equal to one of $(2^{n-1} - 2)$, $(2^{n-1} - 1)$, $(2^{n-1})$ and $(2^{n-1} + 1)$, said apparatus being characterised by comprising: means (42) for dividing said first number by 2 to achieve a value of one-half of said first number; means (30) for determining a third number (G) comprising the n most significant bits of said first number; means (34) for multiplying said third number by 2 to achieve a value of twice said third number; and responsive means (34,36) responsive to said aforesaid means and to the value of said second number for (a) subtracting twice said third number from one-half said first number if the value of said second number is $(2^{n-1} - 2)$, (b) subtracting said third number from one-half said first number if the value of said second number is $(2^{n-1} - 1)$, (c) selecting one-half said first number if said value of said second number is $(2^{n-1})$, and (d) adding said third number to one-half said first number if the value of said second number is $(2^{n-1} + 1)$.

2. Apparatus as claimed in claim 1 characterised in that said multiplying means and said responsive means comprises means (32) for determining the 2's complement of said third number, means (34) for determining twice the 2's complement of said third number, selecting means (36) responsive to the value of said second number (a) for selecting twice the 2's complement of said third number when the value of said second number is $(2^{n-1} - 2)$, (b) for selecting said 2's complement of said third number when the value of said second number is $(2^{n-1} - 1)$, (c) for selecting zero when the value of said second number is $(2^{n-1})$, and (d) for selecting said third number when the value of said second number is $(2^{n-1} + 1)$, and add means for adding one-half said first number to the number selected by said select means.

3. Apparatus for determining a 2n bit approximate quotient of a 2n bit dividend and a 2n bit divisor comprising: means (16) for deriving a first number (2A) equal to 2 times $2^{n-1}$ $(2^{n-1} - 1)$ divided by the n most significant bits of said divisor; first multiplier means (22) for multiplying said divisor by said first number (2A) to derive the result; first complement means (24) for determining the 2's complement of the result from said first multiplier means (22); and second multiplier means (20) for multiplying said dividend by said first number (2A) to derive a result, characterised by: second complement means (32) for determining the 2's complement of the n most significant bits of the result from said second multiplier means (20); determining means (34) for determining 2 times the 2's complement of the n most significant bits of the result from said second multiplier means (20); select means (36) responsive to the n most significant bits of the 2's complement from said first complement means for selecting a value equal to one of (a) the 2's complement from said second complement means, (b) the 2's complement from said determine means, (c) zero, or (d) the n most significant bits of the result from said second multiplier means; shift means (42) for right shifting the result from said second multiplier means (20) one place; third multiplier means (48) for multiplying the n most significant bits of the result from said second multiplier means (20) by the n least significant bits of the 2's complement from said first complement means (24) to derive a result; and adder means (46) for adding the result from said third multiplier means (48) and the result of right shifting by said shift means (42) and the value selected by said select means (36) to determine a 2n bit approximate quotient.

4. Apparatus as claimed in claim 3 characterised by including means (72,70,74) for right shifting said approximate quotient and said divisor by predetermined amounts and for left shifting said dividend a predetermined amount, fourth multiplier means (54) for multiplying the n most significant bits of said shifted approximate quotient by the n least significant bits of said shifted divisor to achieve a result; fifth multiplier means (56) for multiplying the n least significant bits of said shifted approximate quotient by said shifted divisor to achieve a result; and arithmetic means (64) for determining the difference between the shifted dividend (74) and the sum of the n least significant bits of the result of said fourth and fifth multiplier means (54,56) to determine a correction value.

5. Apparatus as claimed in claim 4 characterised by including means (66) for adjusting the value of said approximate quotient by said correction value to achieve a true quotient.

6. Apparatus as claimed in any of claims 3 to 5 characterised in that said adder means (46) further adds binary 0101 to said approximate quotient.

7. A method of determining a 2n bit partial product of a first 2n bit number and a second 2n bit number, said n bit number having a value equal to one of $(2^{n-1} - 2)$, $(2^{n-1} - 1)$, $(2^{n-1})$ and $(2^{n-1} + 1)$, said method characterised by comprising: dividing said first number by 2 to achieve a value of one-half of said first number; determining a third number comprising the n most significant bits of said first number; multiplying said third number by 2 to achieve a value of twice said third number; determining the value of said second number; and performing one of the following operations: (a) subtracting twice said third number from one-half said first number if the value of said second number is $(2^{n-1} - 2)$, (b) subtracting said third number from one-half said first number if the value of said second number is $(2^{n-1} - 1)$, (c) selecting one-half said first number if said value of said second number is $(2^{n-1})$, or (d) adding said third number to one-half said first number if the value of said second number is $(2^{n-1} + 1)$.

8. A method as claimed in claim 7 characterised in that the third number is multiplied by 2 and the operations are performed by determining the 2's complement of said third number, multiplying 2's complement of said third number by 2, selecting twice the 2's complement of said third number when the value of said second number is $(2^{n-1} - 2)$, selecting said 2's complement of said third number when the value of said second number is $(2^{n-1} - 1)$, and selecting said third number when the value of said second number is $(2^{n-1} + 1)$, and adding one-half said first number to the selected number.

DIVIDEND

| a | b |

DIVISOR

| c | d |

$2^{63} (2^{63} - 1)$

14

DIVIDE
$A = \dfrac{2^{63} (2^{63} - 1)}{c}$

16

12

SHIFT LF
(2A)

18

MULTIPLY
D = DIVIDEND x 2A

20

MULTIPLY
B = DIVISOR x 2A

22

2's COMPLEMENT
(c)

24

QUAD
MULTIPLY
C x D

26

QUADRUPLE PRECISION
APPROX. QUOTIENT

*Fig. IA*
(PRIOR ART)

10

QUAD
PRECISION
APPROX.
QUOTIENT

72

DIVISOR

| c | d |

70

MULTIPLY
(E)

13

| | | |

15

DIVIDEND

| a | b |

74

SUBTRACT
(F)

64

CORRECTION

17

TO DOUBLE PRECISION
FLOATING DIVIDE OR
DECIMAL DIVIDE

*Fig. IB*
(PRIOR ART)

*Fig. 2A*

*Fig. 2B*

TO DOUBLE PRECISION
FLOATING DIVIDE OR
DECIMAL DIVIDE

*Fig. 3*